# EUROPÄISCHE PATENTSCHRIFT

(11) **EP 1 291 059 B1**
(45) Veröffentlichungstag und Bekanntmachung des Hinweises auf die Patenterteilung: **24.11.2004**
(21) Anmeldenummer: 02002324.8
(22) Anmeldetag: 31.01.2002
(51) Int. Cl.: B01D 29/64, B01D 29/94, B23Q 11/10

(54) **Vorrichtung zum Separieren und Austragen von Spänen**
Device for separation and removal of machining chips
Dispositif de séparation et élimination des copeaux

(30) Priorität: 07.09.2001 DE 10144157
(43) Veröffentlichungstag der Anmeldung: 12.03.2003
(73) Patentinhaber: Interlit Joistgen GmbH, 51147 Köln (DE)
(72) Erfinder: Wensauer, Dietmar, 51143 Köln (DE); Joistgen, Walter, 51143 Köln (DE)
(74) Vertreter: Hennicke, Ernst Rüdiger, Dipl.-Ing.

(56) Entgegenhaltungen:
- WO-A-01/21281
- DE-U- 20 020 244
- DE-U- 29 822 220
- US-A- 2 876 904
- US-A- 4 295 534
- US-A- 5 738 782

## Beschreibung

Die Erfindung betrifft eine einer spanabhebenden Maschine zugeordnete Vorrichtung zum Separieren und Austragen von Spänen und Arbeitsflüssigkeit, mit einem Sammelbehälter, der im wesentlichen aus einem ersten, zur Aufnahme von Arbeitsflüssigkeit geeigneten Kastenteil und einem zweiten, sich daran anschließenden und unter einer Neigung ansteigenden Kastenteil mit einer oberhalb des Flüssigkeitsspiegels gelegenen Abwurfstelle besteht, mit einem im Betrieb der Vorrichtung in die Arbeitsflüssigkeit im ersten Kastenteil des Behälters eintauchend angeordneten, mit einem Filter- und/oder Siebmittel versehenen Siebkasten und mit einem im Betrieb der Vorrichtung die Späne zu der Abwurfstelle fördernden, ein Förderorgan aufweisenden Späneförderer, wobei der Siebkasten seitlich neben dem Förderorgan des Späneförderers angeordnet ist.

Vorrichtungen zum Separieren und Austragen von Spänen aus Arbeitsflüssigkeit sind beispielsweise aus der DE-U 298 22 220 oder der DE-U 200 20 244 bekannt. Bei diesen bekannten Vorrichtungen sind die Siebkästen jeweils zwischen dem Obertrum und dem Untertrum des Späneförderers angeordnet, wobei das Filter- und/oder Siebmittel sich an der Unterseite des Siebkastens unmittelbar oberhalb des Untertrums des Förderers befindet.

Insbesondere bei der aus der DE-U 200 20 244 bekannten Vorrichtung, die als Späneförderer einen Scharnierbandförderer aufweist, kommt es immer wieder vor, daß sich Späne in den vergleichsweise engen Freiraum zwischen dem Siebkasten und dem Förderorgan festsetzen und den Betrieb der Maschine stören, was es erforderlich macht, die Maschine stillzusetzen und das Förderorgan des Förderers zu öffnen, um Zugang zu dem Bereich zu schaffen, in dem es zu Verstopfungen durch Späne gekommen ist. Diese teilweise Demontage des Förderers, die sowohl bei Scharnierbandförderern als auch bei Kettenkratzförderern auch dann erforderlich ist, wenn der Siebkasten beispielsweise wegen eines verstopften Filter- oder Siebmittels zur Reinigung ausgebaut werden soll, ist sehr aufwendig und führt dazu, daß die Maschine während eines längeren Zeitraums nicht betrieben werden kann und dementsprechend entweder ein Ersatzaggregat für die zugeordnete spanabhebende Maschine zur Verfügung stehen muß oder diese während der Wartungsarbeiten nicht in Betrieb sein kann.

Eine Vorrichtung der gattungsgemäßen Art ist aus der WO 01/21281 A1 bekannt, bei der zwei Siebkästen tief in den Behälter bis auf das Niveau des Untertrums des Späneförderers eintauchen. Bei dieser Vorrichtung sind die Siebkästen als kreisförmige Siebe ausgestaltet, die sich nur in einem verhältnismäßig kurzen Bereich des Kastens befinden. Sie rotieren um eine Achse, die zwischen dem Obertrum und dem Untertrum des Förderers verläuft.

Aus der US 2 876 904 A ist ein Schwerkraftseparator mit Filtereinheit bekannt, bei dem eine rotierend antreibbare Siebtrommel in einen Behälter eintauchend angeordnet ist. Die Siebtrommel wird bei dieser Vorrichtung von innen nach außen durchströmt und dabei abgesiebt Späne u.dgl. werden aus dem Trommelinneren mit Hilfe eines Kratzerförderers ausgetragen. Mit dieser Anordnung wird eine grobe Siebung der verunreinigten Arbeitsflüssigkeit erreicht, so daß für die Feinfilterung eine nachgeschaltete Filterstufe mit einem Filtervlies vorgesehen ist.

Aus der US 5 738 782 A ist eine Reinigungsapparatur für Flüssigkeiten bekannt mit einem Drei-Kammern-Behälter, in dessen einer Kammer die verunreinigte Arbeitsflüssigkeit aufgegeben wird und einer Vorreinigung durch Sedimentation unterzogen wird. Die derart vorgereinigte Arbeitsflüssigkeit strömt unter einer Scheidewand hindurch in die zweite Kammer, die an einer ihrer Seitenwände mit einem Siebblech versehen ist, durch das hindurch die Arbeitsflüssigkeit allein infolge der Schwerkraftwirkung in die dritte Kammer strömen kann.

Aus der US 4 295 534 ist ein Separator bekannt mit einem in mehrere Kammern unterteilten Behälter und einem über diesem schräg angeordneten Förderer, der als Förderorgane mehrere dicht nebeneinander angeordnete Förderschnüre aufweist. An seinem unteren, oberhalb der ersten Kammer des Behälters liegenden Ende, das die Aufgabestelle für verunreinigte Arbeitsflüssigkeit ist, ist der Förderer beidseits mit Lochblechen begrenzt. Mit Spänen verunreinigte Arbeitsflüssigkeit wird auf die nebeneinander verlaufenden Förderschnüre aufgegeben, wobei die Späne auf dem Förderer liegen bleiben und vom Förderorgan abtransportiert werden, während dir derart vorgereinigte Flüssigkeit nach unten in den Behälter, wobei die an der Aufgabestelle vorgesehenen Lochbleche verhindern, daß Späne seitlich am Förderorgan vorbei in den Behälter gelangen können.

Aufgabe der Erfindung ist es, die eine Vorrichtung der eingangs genannten, gattungsgemäßen Art zu schaffen, bei der zum einen die Späne sich nicht zwischen Ober- und Untertrum des Förderers festsetzen und dessen Betrieb behindern und bei der zum anderen auch der Siebkasten ohne aufwendige Demontagearbeiten am Förderer besonders einfach und schnell aus- und wieder eingebaut werden kann.

Diese Aufgabe wird mit der Erfindung dadurch gelöst, daß der Siebkasten seitlich neben dem Obertrum des Förderorgans des Späneförderers so angeordnet ist, daß der Siebkasten von oben demontiert und montiert werden kann, und daß der Siebkasten sich im wesentlichen über die Länge des ersten Kastenteils erstreckt.

Erfindungsgemäß befindet sich der Siebkasten also nicht zwischen Ober- und Untertrum der Förderorgans, sondern seitlich neben diesem, so daß zwischen Unter- und Obertrum des Förderers ausreichend Platz verbleibt, in dem sich Späne nicht in nennenswertem Umfang festsetzen und dadurch den Betrieb des Förderers behindern können. Durch die Anordnung seitlich neben dem Förderer kann der Siebkasten von oben demontiert und montiert werden, ohne daß es hierzu erforderlich ist, Arbeiten am Förderer selbst vorzunehmen, insbesondere das Förderorgan zu öffnen bzw. zu schließen, wie dies bei vielen bislang eingesetzten Vorrichtungen noch erforderlich war, wenn man nicht die im Behälter vorhandene Arbeitsflüssigkeit ablassen wollte, um den Siebkasten dann seitlich nach Demontage einer Abdeckplatte aus einer Inspektionsöffnung herauszuziehen.

Es hat sich gezeigt, daß durch die Anordnung des Siebkastens seitlich neben dem Förderer die Strömungverhältnisse der Arbeitsflüssigkeit im Behälter insbesondere in dessen unterem Teil und zwischen den Trumen des Förderers für dessen Betrieb erheblich besser sind als bei den solchen Vorrichtungen, bei denen der Siebkasten zwischen den Trumen des Förderers vorgesehen ist. Im unteren Behälterteil gibt es bei der erfindungsgemäßen Vorrichtung keine nennenswerten Strömungen, sondern die Späne können sich weitgehend ungehindert auf dem Behälterboden absetzen, von wo sie entweder in an sich bekannter Weise von den Mitnehmern des als Kettenkratzförderers ausgebildeten Späneförderers zur Abwurfstelle gefördert werden oder von wo sie mit Reinigungsschabern, die von den Plattenelementen des als Plattenbandförderers ausgebildeten Späneförderers aufragend angeordnete sind, über eine Umlenkstelle transportiert und hierdurch auf das Obertrum des Plattenbandförderers geworfen und dann ausgetragen werden.

Besonders vorteilhaft ist es, wenn an jeder der beiden Seiten des Förderorgans mindestens ein Siebkasten vorgesehen ist, wodurch eine hohe Filter- bzw. Siebleistung erreicht wird und wodurch es auch möglich ist, auf ein vollständiges Stillsetzen der Vorrichtung während des Austausches eines Siebkastens zu Wartungszwecken zu verzichten. Lediglich der Förderer wird bei einem solchen Austausch eines der beiden Siebkästen regelmäßig stillgesetzt, während aber weiter Filtrat aus dem anderen Siebkasten abgezogen und der spanabhebenden Maschine zugeführt werden kann.

Wie bereits angedeutet, kann der Späneförderer ein Plattenbandförderer und das Förderorgan ein Plattenband sein, das die Späne auf seinem Obertrum aufliegend abfördert, wobei der Siebkasten dann zweckmäßig seitlich neben dem Obertrum des Plattenbandförderers angeordnet ist. Es ist natürlich auch möglich, daß der Späneförderer ein Kratzerförderer und das Förderorgan ein Kratzerband ist, mit dessen Fördertrum die auf einem Fördererboden aufliegenden Späne über diesen geschoben und abtransportiert werden, wobei der Siebkasten dann seitlich neben dem Rücktrum angeordnet ist.

Der Siebkasten kann mit einem Spaltsieb als Siebmittel versehen sein. Eine ganz besonders vorteilhafte Ausgestaltung der Erfindung ergibt sich, wenn der Siebkasten mit einem Laser-Lochblech als Siebmittel ausgestattet ist, das eine vergleichbar gute, wenn nicht gar bessere Abscheidrate wie ein Spaltsieb aufweist, bei dem aber keine Gefahr besteht, daß sich Späne an der Siebfläche festsetzen, wie dies in den Spalten von Spaltsieben geschehen kann.

Das Filter- und/oder Siebmittel ist vorzugsweise aufrecht am Siebkasten angeordnet, also rechtwinklig zu der Ebene, die von dem benachbarten Trum des Förderorgans aufgespannt wird. Das Förderorgan kann mit seitlichen, am Filter- und/oder Siebmittel wirksamen Reinigungselementen versehen sein, die beim Umlauf des Förderorgans am Filter- und/oder Siebmittel vorbeibewegt werden und daran anhaftende Späne, d.h. den Filterkuchen mechanisch entfernen, wodurch die hohe Filter- bzw. Siebleistung über einen langen Zeitraum erhalten werden kann.

Die Reinigungselemente können im wesentlichen aus sich über die Höhe des Filter- und/oder Siebmittels erstreckenden Bürsten und/oder Schabern bestehen, wobei die Bürsten Borsten aus Kunststoff und/oder Metall und die Schaber Schabelemente aus Kunststoff, Hartmetall und/oder Federstahl aufweisen können. Besonders vorteilhaft ist es, wenn die Reinigungselemente in am Förderorgan befestigten Halteleisten austauschbar gehaltert sind, so daß sie leicht ersetzt werden können, wenn sie verschlissen oder verschmutzt sind.

Der Siebkasten kann in einer an einer Innenseite einer Seitenwand des Behälters angeordneten Siebkastenaufnahme angeordnet sein, wo er im Betrieb der Vorrichtung sicher gehalten wird und aus der er für Wartungszwecke schnell und einfach ausgebaut werden kann. Vorzugsweise ist der Siebkasten über einen von oben oder seitlich über die Behälterseitenwand zugänglichen Abzugstutzen und eine Filtratleitung an eine Filtratabzugspumpe angeschlossen, wobei insbesondere bei einem oben angeordneten Abzugstutzen der Ausbau des Siebkastens leicht möglich ist, ohne die im Behälter befindliche Flüssigkeit ablassen zu müssen.

Weitere Merkmale und Vorteile der Erfindung ergeben sich aus der nachfolgenden Beschreibung und der Zeichnung, worin eine bevorzugte Ausführungsform der Erfindung an einem Beispiel näher erläutert wird. Es zeigt:

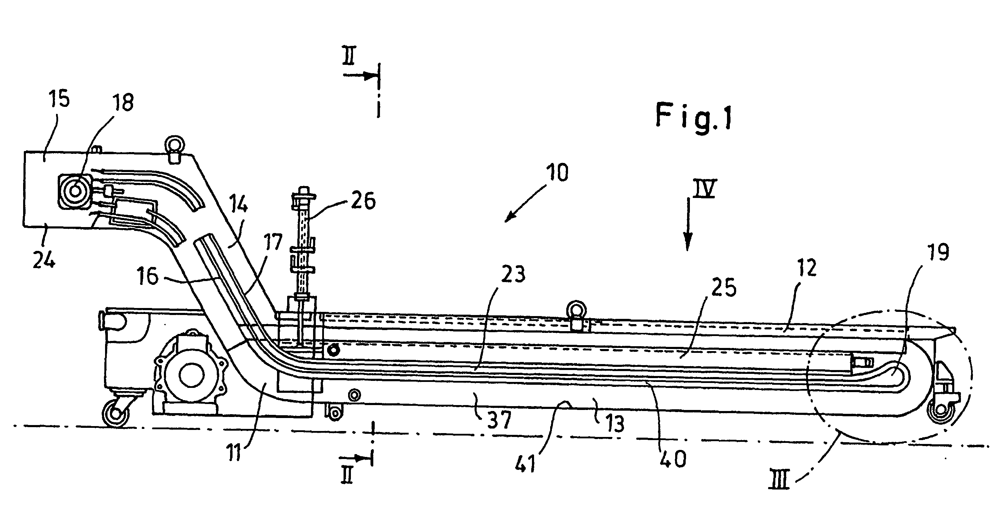

**Fig. 1** eine erfindungsgemäße Vorrichtung in einem Längsschnitt;
**Fig. 2** den Gegenstand der Fig. 1 in einem Querschnitt längs der Linie II-II;

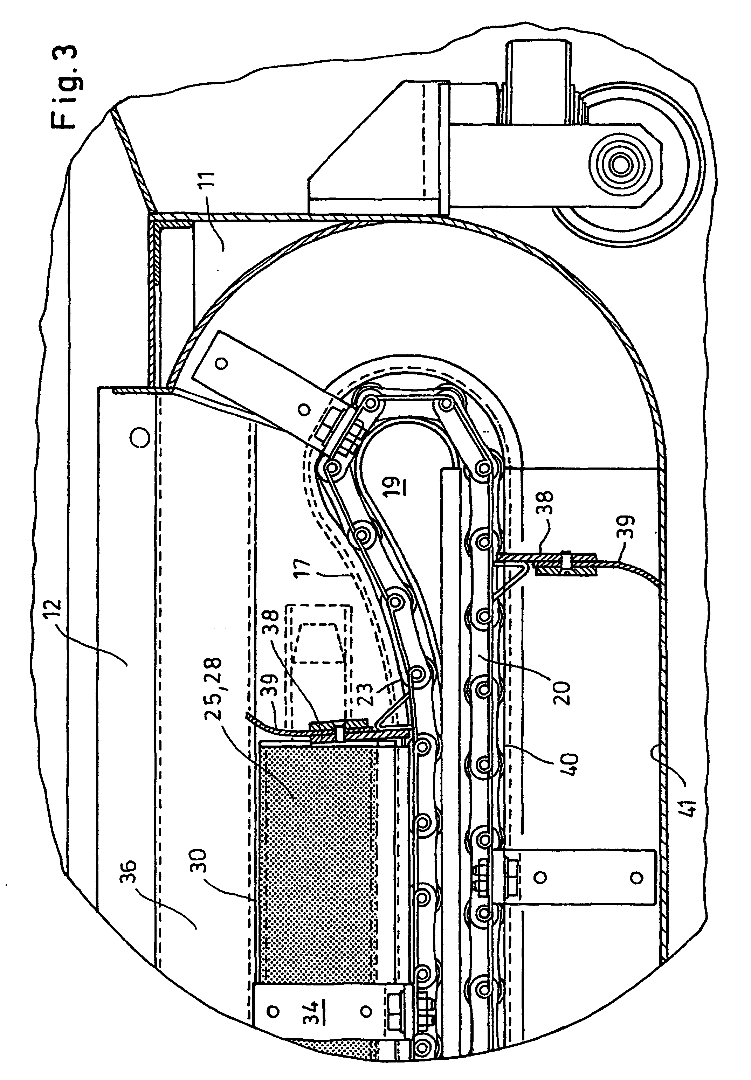

**Fig. 3** eine Einzelheit III der Fig. 1 im Bereich der endseitigen Umlenkung des Förderorgans; und
**Fig. 4** eine Teildraufsicht der Vorrichtung nach Fig. 1 im Bereich des Pfeils IV.

Die in der Zeichnung in ihrer Gesamtheit 10 bezeichnete Vorrichtung dient dazu, Späne und Arbeitsflüssigkeit, insbesondere Kühlsuspensionen, voneinander zu trennen, die aus einer spanabhebenden Maschine, beispielsweise einer Schleif-, Fräsoder Drehmaschine stammen, der die Vorrichtung zugeordnet ist.

Die Vorrichtung weist einen länglichen Behälter 11 mit einer oben offenen, unterhalb eines (nicht dargestellten) Abwurfschachtes der spanabhebenden Maschine angeordneten Aufgabeöffnung 12 auf, durch die die Arbeitsflüssigkeit und die darin enthaltenen Späne in den Behälter gelangen.

Der Behälter besteht im wesentlichen aus einem ersten, horizontal angeordneten und die Aufgabeöffnung 12 aufweisenden Kastenteil 13 und einen sich daran anschließenden, unter einer Neigung von etwa 45° ansteigenden zweiten Kastenteil 14, der in einem Späneabwurfkasten 15 endet. Im Inneren des Behälters ist ein Späneförderer 16 mit einem Scharnierband als Förderorgan 17 angeordnet, das von einem am Späneabwurfkasten 15 angeordneten Antriebsmotor (18) angetrieben und am vorderen Ende der Aufgabeöffnung unterhalb von dieser um eine Umlenkführung 19 umgelenkt wird. Dabei ist die Anordnung so getroffen, daß die einzelnen Platten des Scharnierbands 17 an ihren Enden an den Elementen von seitlichen Laschenketten 20 angeschlossen sind, die mit Führungsrollen an den Innenseiten 21 der Behälterwandungen 22 angeordneten Kettenführungen laufen.

Die mit Spänen beladene Arbeitsflüssigkeit wird der Vorrichtung 10 über die Aufgabeöffnung zugeführt, wobei sich die Späne auf dem Obertrum 23 des Scharnierbandförderers 16 absetzen und von diesem durch den ersten und zweiten Kastenteil zum Späneabwurfkasten gefördert werden, wo sie durch eine Abwurföffnung 24 in einen darunter angeordneten Sammelcontainer fallen.

Die Arbeitsflüssigkeit, also beispielsweise Schneidöl oder Kühlemulsion, wird aus dem Behälter über zwei Siebkästen 25a,b von einer Förderpumpe über eine Absaugleitung 26 abgezogen und der spanabhebenden Maschine wieder zugeführt. Wie sich aus den Zeichnungen gut erkennen läßt, sind die Siebkästen seitlich neben dem Obertrum des Scharnierbands 17 des Späneförderers 16 angeordnet. Sie bestehen aus sich im wesentlichen über die Länge des ersten Kastenteils 13 erstreckenden, im Querschnitt rechteckigen Kastenrohren 27, die an ihren dem Förderer zugewandten Innenseiten mit senkrecht angeordneten Filter- bzw. Siebelementen 28 versehen sind.

Die Filter- bzw. Siebelemente 28 bestehen bei der bevorzugten Ausführungsform der Erfindung aus Laser-Siebblechen, deren Sieböffnungen mit Hilfe eines Lasers hergestellt sind und deren gesamte Siebfläche erheblich größer ist als die von konventionell hergestellten Spaltsieben mit Spalten, wenn deren Spaltweite dem Durchmesser der Sieblöcher der bevorzugt verwendeten Siebbleche entspricht. Die Kastenrohre sind an ihren näher zum Späneabwurfkasten 15 hin gelegenen Enden mit je einem Abzugstutzen 29 versehen, der oben aus dem jeweiligen Kastenrohr herausragt und an den die Absaugleitung 26 angeschlossen ist. Die zu reinigende Arbeitsflüssigkeit strömt infolge des von der Förderpumpe in der Absaugleitung und den Kastenrohren erzeugten Unterdruckes durch die Lasersiebe in die Kastenrohre, wobei die Verunreinigungen in Form von Spänen außen am Siebelement abgeschieden werden.

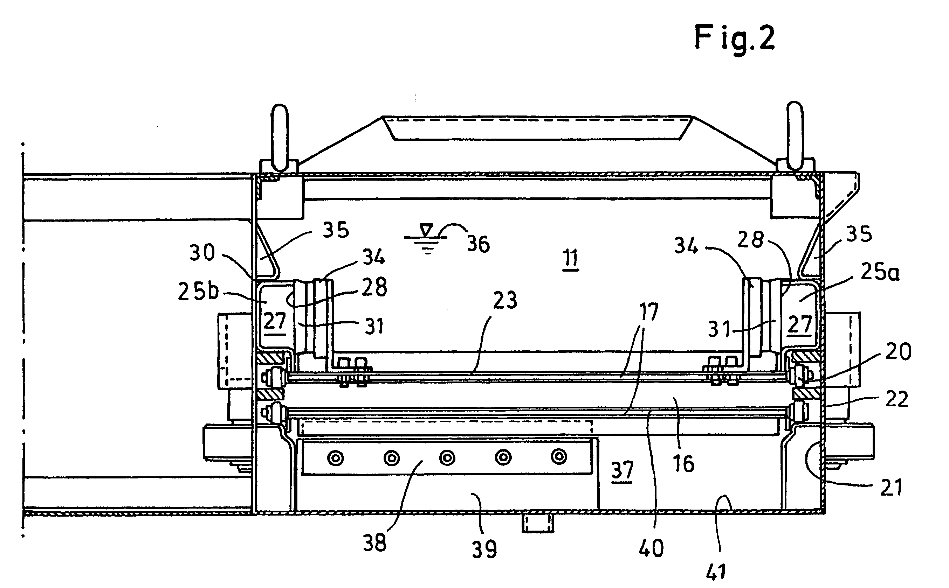

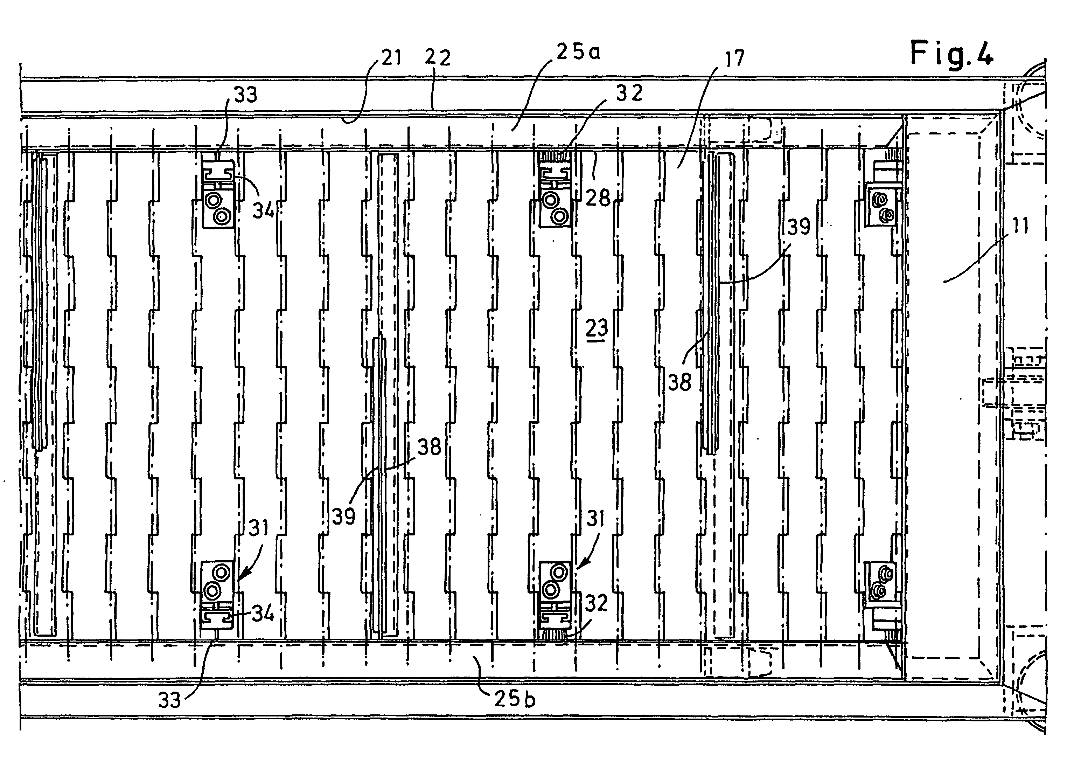

Wie am besten in Fig. 2 erkennbar ist, sind die beiden Siebkästen 25a,b in an den Innenseiten 21 der Behälterwände 22 angeordnete Siebkastenaufnahmen 30 eingesetzt, die an die rechteckige Querschnittsform der Kastenrohre angepasst sind und die verhindern, daß sich diese vertikal oder in ihrer Längsrichtung bewegen können. Gegen ein Herausfallen der Kastenrohre in das Behälterinnere können die Siebkästen in den Siebkastenaufnahmen mit Hilfe von (nicht dargestellten) Verriegelungselementen gesichert sein. Bei der gezeigten Ausführungsform sorgen aber bereits seitlich am Scharnierband 17 in regelmäßigen Abständen voneinander angeordnete Reinigungselemente 31 dafür, daß die Siebkästen während des Betriebs der Vorrichtung in ihren Siebkastenaufnahmen verbleiben. Die Reinigungselemente 31 bestehen hierbei im wesentlichen aus sich über die Höhe des Filter- bzw. Siebmittels 28 erstreckenden Bürsten 32 bzw. Schabern 33, die in am Förderorgan 17 befestigten Halteleisten 34 austauschbar gehaltert sind. Die in die Halteleisten 34 eingesetzten Reinigungselemente 31 werden im Betrieb der Vorrichtung von dem umlaufenden Scharnierband 17 an den Siebelementen 28 vorbeibewegt und entfernen dabei die an den Siebelementen anhaftenden, abgeschiedenen Späne und andere Verunreinigungen, so daß die Sieb- bzw. Filterleistung der Siebkästen über eine lange Betriebsdauer weitestgehend erhalten bleibt. Gleichzeitig drücken die aus Kunststoff, Hartmetall und/oder Federstahl bestehenden Borsten der Bürsten bzw. Schaber quer zur Förderrichtung des Späneförderers gegen die Siebkästen und drücken diese dadurch fest in die Siebkastenaufnahmen, wie dies insbesondere aus den Fig. 2 und 4 ersichtlich ist.

Die Reinigungselemente 31 können leicht nach oben aus ihren im Querschnitt etwa C-förmigen Halteleisten 34 herausgezogen werden, um sie beispielsweise bei Verschleiß gegen neue Bürsten und Schaber auszutauschen. Auch für die Demontage der Siebkästen 25 werden die von oben zugänglichen Reinigungselemente demontiert, so daß dann der Druck auf die Siebelemente der Siebkästen entfällt und diese in Richtung auf das Behälterinnere aus ihren Siebkastenaufnahmen herausgezogen und zwischen den oberen Begrenzungen 35 der Siebkastenaufnahmen und den dann leeren Halteleisten 34 hindurch nach oben aus dem Behälter 11 entnommen werden können. Die Demontage eines Siebkastens dauert dementsprechend nur sehr kurze Zeit, während der die gesamte Vorrichtung nicht vollständig stillgesetzt werden muß, sondern aus dem jeweils anderen Siebkasten weiterhin Arbeitsflüssigkeit über den Abzugstutzen von der Förderpumpe abgezogen und der spanabhebenden Maschine wieder zugeführt werden kann. Lediglich der Abtransport der aus der Arbeitsflüssigkeit abgeschiedenen Späne muß während eines solchen Austausches eines der Siebkästen unterbrochen werden, da der Späneförderer 16 hierfür stillgesetzt werden muß.

Es versteht sich bei alledem, daß die Siebkästen im Betrieb der Vorrichtung regelmäßig vollständig in der im Behälter stehenden Flüssigkeit eingetaucht sind, so daß zuverlässig vermieden wird, daß die Förderpumpe beim Ansaugen der Arbeitsflüssigkeit Falschluft zieht. Zweckmäßig kann ein Füllstandsschalter vorgesehen sein, der dafür sorgt, daß die Pumpe abgeschaltet wird, wenn der in Fig. 2 bei 36 angedeutete Flüssigkeitsspiegel unter einen voreingestellten Wert absinkt.

Um zu vermeiden, daß Späne oder sonstige Verunreinigungen, die am Obertrum des Scharnierbandes 17 vorbei in den unteren Teil 37 des Behälters 11 gelangen, diesen zusetzen und den Späneförderer dadurch auf Dauer blockieren, ist dieser mit im regelmäßigen Abstand von den Scharnierbandplatten aufragend angeordneten Kratzerleisten 38 versehen, die quer zur Förderrichtung des Förderers angeordnet sind und mit einem flexiblen Kunststoffkratzer 39 vom Untertrum 40 des Förderers herabhängend über den Boden 41 des Behälters kratzen und dabei die sich auf diesem ansammelnden Späne mitnehmen und um die endseitige Umlenkführung 19 herum wieder in den oberen Bereich des Behälters transportieren, wo sie sich auf dem Obertrum 23 absetzen können und von diesem aus dem Behälter gefördert werden. Die Kratzerleisten erstrecken sich jeweils über etwa zwei Drittel der Gesamtbreite des Scharnierbands 17 und ragen wechselweise einmal von der linken und einmal von der rechten Bandseite in das Behälterinnere hinein, so daß die im unteren Teil 37 des Behälters stehende Arbeitsflüssigkeit durch die von den Kratzerleisten freigelassenen Bereich strömen kann, während das Scharnierband umläuft.

Man erkennt, daß die seitlich neben dem Förderorgan 17 des Späneförderers 16 angeordneten Siebkästen 25 für die Wartung außerordentlich leicht von oben zugänglich sind, wobei es nicht erforderlich ist, hierfür die im Behälter stehende Flüssigkeit ganz oder teilweise abzulassen. Die von den Reinigungselementen an den Sieben der Siebkästen gelösten Späne oder sonstige Verunreinigungen gelangen zum größten Teil direkt auf das Obertrum des Scharnierbandes und werden somit auf schnellstem Wege zum Abwurfkasten 15 transportiert.

Man erkennt auch, daß anstelle der bevorzugt zum Einsatz kommenden Laser-Lochbleche auch andere Sieb- oder Filterelemente Verwendung finden können, beispielsweise herkömmliche Spaltsiebe, Filtertücher od.dgl., die jeweils an die zu erwartenden Späneformen und -größen optimal angepasst sein können. Die zur Abreinigung der Siebelemente verwendeten Reinigungselemente 31 sind zweckmäßig verschieden ausgestaltet und bestehen im Wechsel aus Bürsten und Schabern aus verschiedenen Werkstoffen, die hierdurch unterschiedliche Reinigungscharakteristika haben und die verschiedenen, sich an den Sieb- bzw. Filterelementen ansammelnden Verunreinigungen weitgehend vollständig entfernen.

Die Erfindung ist nicht auf das dargestellte und beschriebene Ausführungsbeispiel beschränkt, sondern es ist eine Reihe von Änderungen und Ergänzungen denkbar, ohne den Rahmen der Erfindung zu verlassen. So ist es beispielsweise möglich, lediglich auf einer Seite des Späneförderers einen Siebkasten anzuordnen, wenn nur mit geringem Späneanfall zu rechnen ist, für den die Siebfläche lediglich eines Kastens ausreicht. Die Siebkästen können über ihre Länge auch in einzelne Kastenelemente unterteilt sein, die dann beim Aus- bzw. Einbau leichter handhabbar sind. Dabei kann jedes Kastenelement einen eigenen Abzugstutzen haben und separat aus- bzw. eingebaut werden, während die benachbarten Siebkastenelemente weiter betrieben werden. Der Abzug des Filtrates muß nicht nach oben, sondern kann auch seitlich aus dem Siebkasten erfolgen, wenn in der Behälterseitenwand 22 eine Öffnung für den Durchgang des Abzugstutzens vorgesehen ist. Dieser muß in diesem Fall in der Behälterwandung abgedichtet werden, damit keine Arbeitsflüssigkeit an dieser Stelle austreten kann. Anstelle eines Plattenbandoder Scharnierförderers kann die Erfindung auch einen anderen, geeigneten Förderer wie beispielsweise einen Kettenkratzförderer verwenden.

## Patentansprüche

1. Vorrichtung zum Separieren und Austragen von Spänen und Arbeitsflüssigkeit, mit einem Sammelbehälter (11), der im wesentlichen aus einem ersten, zur Aufnahme von Arbeitsflüssigkeit geeigneten Kastenteil (13) und einem zweiten, sich daran anschließenden und unter einer Neigung ansteigenden Kastenteil (14) mit einer oberhalb des Flüssigkeitsspiegels gelegenen Abwurfstelle (15, 24) besteht, mit einem im Betrieb der Vorrichtung in die Arbeitsflüssigkeit im ersten Kastenteil des Behälters eintauchend angeordneten, mit einem Filter- und/oder Siebmittel versehenen Siebkasten und mit einem im Betrieb der Vorrichtung die Späne zu der Abwurfstelle fördernden, ein Förderorgan aufweisenden Späneförderer, wobei der Siebkasten seitlich neben dem Förderorgan des Späneförderers (16) angeordnet ist, **dadurch gekennzeichnet, daß** der Siebkasten (25) seitlich neben dem Obertrum des Förderorgans des Späneförderers (16) so angeordnet ist, daß der Siebkasten von oben demontiert und montiert werden kann, und daß der Siebkasten (25) sich im wesentlichen über die Länge des ersten Kastenteils (13) erstreckt.

2. Vorrichtung nach Anspruch 1, **dadurch gekennzeichnet, daß** an jeder der beiden Seiten des Förderorgans (17) mindestens ein Siebkasten (25a,b) vorgesehen ist.

3. Vorrichtung nach Anspruch 1 oder 2, **dadurch gekennzeichnet, daß** der Späneförderer (16) ein Plattenbandförderer und das Förderorgan (17) ein Plattenband ist, das die Späne auf seinem Obertrum (23) aufliegend abfördert, und daß der Siebkasten (25) seitlich neben dem Obertrum (23) des Plattenbandförderers (16) angeordnet ist.

4. Vorrichtung nach Anspruch 1 oder 2, **dadurch gekennzeichnet, daß** der Späneförderer (16) ein Kratzerförderer und das Förderorgan (17) ein Kratzerband ist, mit dessen Fördertrum die auf einem Förderboden aufliegenden Späne über diesen geschoben und abtransportiert werden, und daß der Siebkasten seitlich neben dem Fördertrum angeordnet ist.

5. Vorrichtung nach einem der Ansprüche 1 bis 4, **dadurch gekennzeichnet, daß** der Siebkasten (25) mit einem Spaltsieb als Siebmittel (28) versehen ist.

6. Vorrichtung nach einem der Ansprüche 1 bis 4, **dadurch gekennzeichnet, daß** der Siebkasten (25) mit einem Laser-Lochblech als Siebmittel (28) versehen ist.

7. Vorrichtung nach einem der Ansprüche 1 bis 6, **dadurch gekennzeichnet, daß** das Filter- und/oder Siebmittel (28) aufrecht am Siebkasten (25) angeordnet ist.

8. Vorrichtung nach einem der Ansprüche 1 bis 7, **dadurch gekennzeichnet, daß** das Förderorgan (17) mit seitlichen, am Filter- und/oder Siebmittel (28) wirksamen Reinigungselementen (31) versehen ist.

9. Vorrichtung nach Anspruch 8, **dadurch gekennzeichnet, daß** die Reinigungselemente (31) im wesentlichen aus sich über die Höhe des Filter- und/oder Siebmittels erstreckenden Bürsten (32) und/oder Schabern (33) bestehen.

10. Vorrichtung nach Anspruch 9, **dadurch gekennzeichnet, daß** die Bürsten (32) Borsten aus Kunststoff und/oder Metall aufweisen.

11. Vorrichtung nach Anspruch 9, **dadurch gekennzeichnet, daß** die Schaber (33) Schabelemente aus Kunststoff, Hartmetall und/oder Federstahl aufweisen.

12. Vorrichtung nach einem der Ansprüche 8 bis 11, **dadurch gekennzeichnet, daß** die Reinigungselemente (31) in am Förderorgan (17) befestigten Halteleisten (34) austauschbar gehaltert sind.

13. Vorrichtung nach einem der Ansprüche 1 bis 12, **dadurch gekennzeichnet, daß** der Siebkasten (25) in einer an einer Innenseite (21) einer Seitenwand (22) des Behälters (11) angeordneten Siebkastenaufnahme (30) angeordnet ist.

14. Vorrichtung nach einem der Ansprüche 1 bis 13, **dadurch gekennzeichnet, daß** der Siebkasten (25) über einen von oben oder seitlich durch die Behälterseitenwand (22) zugänglichen Abzugstutzen und eine Filtratleitung an eine Filtratabzugspumpe angeschlossen ist.

## Claims

1. Device for separating and discharging chips and operating fluid, with a collecting tank which basically consists of a first box part suitable for holding operating fluid and a second, adjacent box part ascending with an inclination with a discharge point above the level of the fluid, with a strainer box having a filter and/or sieve medium which in the operation of the device being immersed in the operating fluid in the first box part of the tank and with a chip conveyor with a conveyor device which in the operation of the device conveys the chips to the discharge point, whereat the strainer box is arranged next to the conveyor device of the chip conveyor (16), **characterised by** the fact that the strainer box (25) is arranged laterally next to the upper strand of the conveyor device of the chip conveyor in such a way that the strainer box can be removed and installed from above and that the strainer box (25) basically extends along the length of the first box part (13).

2. Device as in claim 1, **characterised in that** at least one strainer box (25a, b) is provided at each of the two sides of the conveyor device (17).

3. Device as in claim 1 or 2, **characterised in that** the chip conveyor (16) is a plate belt conveyor and the conveyor device (17) is a plate belt which carries the chips lying on its upper strand (23) and that the strainer box (25) is arranged next to the upper strand (23) of the plate belt conveyor (16).

4. Device as in claim 1 or 2, **characterised in that** the chip conveyor (16) is a scraper conveyor and the conveyor device (17) is a scraper belt with the carrying run of which the chips lying on a conveyor surface are moved along said surface and are discharged and that the strainer box is arranged laterally beside of the carrying run.

5. Device as in one of the claims 1 to 4, **characterised in that** the strainer box (25) is equipped with a slotted screen as a sieve medium (28).

6. Device as in one of the claims 1 to 4, **characterised in that** the strainer box (25) is fitted with a laser perforated plate as a sieve medium (28).

7. Device as in one of the claims 1 to 6, **characterised in that** the filter and/or sieve medium (28) is arranged vertically on the strainer box (25).

8. Device as in one of the claims 1 to 7, **characterised in that** the conveyor device (17) is equipped with lateral cleaning elements (31) which act on the filter and/or sieve medium (28).

9. Device as in claim 8, **characterised in that** the cleaning elements (31) basically consist of brushes (32) and / or scrapers (33) extending over the height of the filter and / or sieve medium.

10. Device as in claim 9, **characterised in that** the brushes (32) have plastic and / or metal bristles.

11. Device as in claim 9, **characterised in that** the scrapers (33) have scraping elements made of plastic, carbide and / or spring steel.

12. Device as in one of the claims 8 to 11, **characterised in that** the cleaning elements (31) are supported exchangeably in retaining rails (34) fixed to the conveyor device (17).

13. Device as in one of the claims 1 to 12, **characterised in that** the strainer box (25) is arranged in a strainer box holder (30) mounted on an inner side (21) of a side wall (22) of the tank (11).

14. Device as in one of the claims 1 to 13, **characterised in that** the strainer box (25) is connected to a filtrate extraction pump via a discharge nozzle being accessible from above or from the side through the side wall of the tank (22) and via a filtrate pipe.

## Revendications

1. Dispositif pour la séparation et l'évacuation de copeaux et de liquides de travail, avec un réservoir collecteur, constitué pour l'essentiel d'une première partie de caisson conçue pour la réception de liquide de travail et d'une deuxième partie de caisson qui se rattache à la première et qui est inclinée vers le haut, présentant un endroit d'éjection situé au-dessus du niveau de liquide, équipé lors du fonctionnement de l'installation d'un caisson de filtrage muni d'un moyen de filtrage/tamisage plongeant dans le liquide de travail dans la première partie de caisson et d'un système de transport d'un transporteur de copeaux jusqu'à l'endroit d'éjection lors du fonctionnement de l'installation, étant donné que le caisson de filtrage est monté latéralement à côté du système de transport du transporteur de copeaux (16), **caractérisée par le fait que** le caisson de filtrage (25) est disposé latéralement à côté du brin supérieur du système de transport du transporteur de copeaux (16) de telle sorte que le boîtier de filtrage puisse être démonté et remonté par le haut et que le caisson de filtrage (25) s'étend pour l'essentiel sur toute la longueur de la première partie de caisson (13).

2. Dispositif selon la revendication 1, **caractérisée par le fait que** chacun des deux côtés du système de transport (17) est équipé d'au moins un caisson de filtrage (25 a, b).

3. Dispositif selon la revendication 1 ou 2, **caractérisée par le fait que** le transporteur de copeaux (16) est un transporteur à plaques et que le système de transport (17) est un convoyeur à plaques qui transporte les copeaux sur son brin supérieur (23) en position couchée et **par le fait que** le caisson de filtrage (25) est disposé latéralement à côté du brin supérieur (23) du transporteur à plaques (16).

4. Dispositif selon la revendication 1 ou 2, **caractérisée par le fait que** le transporteur de copeaux (16) est un entraîneur à raclettes et que le système de transport (17) est un convoyeur à augets dont le brin transporteur pousse et emporte les copeaux gisant sur un plancher de transport et que le caisson de filtrage est disposé latéralement à côté du brin transporteur.

5. Dispositif selon l'une des revendications 1 à 4, **caractérisée par le fait que** le caisson de filtrage (25) est équipé d'un tamis à fentes comme moyen de filtrage (28).

6. Dispositif selon l'une des revendications 1 à 4, **caractérisée par le fait que** le caisson de filtrage (25) est équipé d'une tôle perforée à laser comme moyen de filtrage (28).

7. Dispositif selon l'une des revendications 1 à 6, **caractérisée par le fait que** le moyen de filtrage et/ou de tamisage (28) est disposé verticalement dans le caisson de filtrage (25).

8. Dispositif selon l'une des revendications 1 à 7, **caractérisée par le fait que** le moyen de transport (17) est équipé d'éléments latéraux de nettoyage efficaces (31), montés sur le moyen de filtrage et/ou de tamisage (28).

9. Dispositif selon la revendication 8, **caractérisée par le fait que** les éléments de nettoyage (31) sont constitués pour l'essentiel de brosses (32) et/ou de racles (33) s'étendant sur toute la hauteur du moyen de filtrage et/ou de tamisage.

10. Dispositif selon la revendication 9, **caractérisée par le fait que** les brosses (32) présentent des garnitures en plastique et/ou métal.

11. Dispositif selon la revendication 9, **caractérisée par le fait que** les racles (33) présentent des éléments de raclage en plastique, en métal trempé et/ou en acier pour ressorts.

12. Dispositif selon l'une des revendications 8 à 11, **caractérisée par le fait que** les éléments de nettoyage (31) sont fixés de manière interchangeable sur des barres de fixation (34) montées dans le système de transport (17).

13. Dispositif selon l'une des revendications 1 à 12, **caractérisée par le fait que** le caisson de filtrage (25) est disposé sur un logement de caisson de filtrage (30) situé à la face intérieure (21) de l'une des parois latérales (22) du réservoir (11).

14. Dispositif selon l'une des revendications 1 à 13, **caractérisée par le fait que** le caisson de filtrage (25) est raccordé via une conduite d'aération accessible par le haut ou latéralement à travers la paroi latérale de réservoir (22) et raccordée à une pompe d'évacuation des filtrats.
